# EUROPEAN PATENT APPLICATION

(11) **EP 4 596 079 A1**
(43) Date of publication of application: **06.08.2025**
(21) Application number: 23870177.5
(22) Date of filing: 04.09.2023
(51) Int. Cl.: B01D 29/35, B01D 35/02, B01D 35/16, B67D 3/04, C02F 9/00, F16K 11/074, C02F 1/44

(54) **FILTER**

(30) Priority: 28.09.2022 CN 202222746174 U
(71) Applicant: Yuyao Yadong Plastic Co., Ltd., Yuyao, Zhejiang 315456 (CN)
(72) Inventor: CHU, Zhenlin, Ningbo, Zhejiang 315456 (CN); HU, Jizong, Ningbo, Zhejiang 315456 (CN)
(74) Representative: Tahtadjiev, Konstantin
(86) International application number: PCT/CN2023/116775
(87) International publication number: WO 2024/066937

(57) **Abstract**

The present invention provides a filter, comprising a filtering device (20) and a water flow control valve (10), wherein the filtering device (20) is provided to filter raw water, and the water flow control valve (10) is connected to the filtering device (20) and is provided to control the flow of the raw water in the filtering device (20), so that the functions such as filtering function, back-flushing function, raw water supply function, and standby function are implemented.

## Description

### FIELD OF INVENTION

The present invention relates a filter, and more particularly to a filter capable of purifying raw water (or tap water) to obtain purified water. The present invention further relates to a water flow control valve for a filter.

### DESCRIPTION OF RELATED ARTS

With the increasing improvement of people's living standards and increasing attention to health, people's requirements for the quality of domestic water are getting higher and higher. However, in many countries, especially in developing countries, many tap water sources are surface waters, which is provided to users after be purified and disinfected by water treatment plants. The water treatment in waterworks is extensive and not enough to remove all impurities, such as particulate pollutants (meshy gelatin, sediment, even bacteria, etc.). In addition, the aging of the tap water supply network can also bring new pollution to tap water. In order to further purify tap water and improve its cleanliness, people use various water purification equipment to treat tap water. For example, people use filters (such as activated carbon, PP cotton, or ultrafiltration filter materials) to filter or ultrafilter tap water, using a water softener to reduce tap water hardness, and using an RO membrane water purifier to obtain purified water with extremely high purity. However, whether it is ultrafiltration treatment of tap water, treatment of tap water using RO membrane water purifiers, or softening treatment of tap water using water softeners, pre-filtration is extremely necessary. Using pre-filtration to remove particulate impurities from tap water can effectively prevent ultrafiltration filters and RO membranes being blocked and prevent softening materials being contaminated, and significantly improve the service life of ultrafiltration filters and RO membranes.

Generally, a filter should have at least two functions: water filtration and raw water supply. The water filtration function of the filter is used to filter tap water and the raw water supply function of the filter ensures that the filter can still provide tap water when the water filtration function fails (such as filter element damage, filter element blockage, etc.), avoiding situations where the user has no water available. For the convenience of users, the filter should also has back (direction) flushing function, rinse function, and standby function. The back-flushing function of the filter allows the filter cartridge to be back-flushed to flush away the dirt accumulated in the filter cartridge for a long time, the rinse function of the filter allows the residual dirt on the clean water outlet side of the filter cartridge to be flushed away when the filter cartridge is back-flushed, or to compact the filter material to prepare for the next filtration, and the standby working position can stop the supply of tap water to the downstream of the filter, making it easier to replace the filter cartridge or maintain or repair the indoor water supply network. In addition, the back-flushing function of the filter can restore its water filtration function when the filter cartridge is blocked and needs to be replaced, so as to leave time for the users to purchase a new filter cartridge. Therefore, the water filtration function, raw water supply function, and back-flushing function of the filter are relatively more important.

However, the vast majority of existing filters only have a few of the aforementioned functions. For example, the water-treating apparatus disclosed in the patent (application number CN201110050404.8) only has water filtration function, back-flushing function, and rinse function, the pre-filter disclosed in the utility model patent (application number CN202121506550.2) only has filtration function and raw water supply function, and the pre-filter disclosed in the utility model patent (application number CN202122439460.2) only has filtration function, raw water supply function, and standby function.

The lack of functionality in existing filters has caused some inconvenience to users.

### SUMMARY OF THE PRESENT INVENTION

A main advantage of the present invention is to provide a filter, wherein the valve core of the water flow control valve of the filter of the present invention is a cylindrical valve core, and it can control the flow of water, thereby enabling the filter of the present invention to achieve water filtration function, raw water supply function, and backwash function.

Another advantage of the present invention is to provide a filter, wherein the valve core of the water flow control valve of the filter of the present invention is rotated in a predetermined direction, so that when the water flow control valve is switched from a filtering working position to a raw water supply working position, water pressure in the filtering device of the filter of the present invention can be released through the water flow control valve, thereby making it easy to replace the filter cartridge of the filtering device of the present invention.

Other objectives and features of the present invention will become apparent from the following detailed description.

According to one aspect of the present invention, the foregoing and other objects and advantages are attained by a filter of the present invention, which comprising:
a filtering device, wherein the filtering device has a first opening and a second opening; and
a water flow control valve, wherein the water flow control valve is connected with the filtering device, wherein the water flow control valve comprises a valve body and a cylindrical valve core, wherein the valve body defines a valve cavity, a water inlet channel and a water outlet channel, the cylindrical valve core has a control surface, a first fluid opening, a second fluid opening, a first communication opening, a second communication opening, a third communication opening and a fourth communication opening, wherein the first communication opening, the second communication opening, the third communication opening and the fourth communication opening are formed at the control surface of the cylindrical valve core and separated from each other, wherein the first fluid opening is communicated with the first communication opening, the second fluid opening is respectively communicated with the second opening and the second communication opening, and the third communication opening is communicated with the fourth communication opening, the water inlet channel of the valve body is adapted to be communicated with a raw water source, wherein the cylindrical valve core is rotatably arranged inside the valve cavity, and when the cylindrical valve core is rotated to control the water flow control valve in a filtering working position, the first fluid opening of the cylindrical valve core is communicated with the first opening, the first communication opening of the cylindrical valve core is further communicated to the water inlet channel of the valve body, and the second communication opening of the cylindrical valve core is further communicated to the water outlet channel of the valve body.

Still further objects and advantages of the present invention will become apparent from a consideration of the ensuing description and drawings.

These and other objectives, features, and advantages of the present invention will become apparent from the following detailed description and the accompanying drawings.

### BRIEF DESCRIPTION OF THE DRAWINGS

FIG.1 is a front view of a filter according to an embodiment of the present invention.
FIG.2 is an assembly diagram of the filter according to the above embodiment of the present invention.
FIG.3A is a longitudinal sectional view of the filter according to the above embodiment of the present invention, wherein the filter shown in Fig.3A is under a filtering working state, and the dotted line arrows shown in Fig.3A respectively point as used herein to the directions of water flow under the filtering working state.
FIG.3B is another lateral sectional view of the filter according to the above embodiment of the present invention, wherein the filter of the present invention which is shown in Fig.3B is under the filtering working state.
FIG.4A is a longitudinal sectional view of the filter according to the above embodiment of the present invention, wherein the filter shown in Fig.4A is under a raw water supply working state, and the dotted line arrows shown in Fig.4A respectively point as used herein to the directions of water flow under the raw water supply working state.
FIG.4B is another lateral sectional view of the filter according to the above embodiment of the present invention, wherein the filter of the present invention which is shown in Fig.4B is under the raw water supply working state.
FIG.5A is a longitudinal sectional view of the filter according to the above embodiment of the present invention, wherein the filter shown in Fig.5A is under a back-flushing working state, and the dotted line arrows shown in Fig.5A respectively point as used herein to the directions of water flow under the back-flushing working state.
FIG.5B is another longitudinal sectional view of the filter according to the above embodiment of the present invention, wherein the filter shown in Fig.5B is under the back-flushing working state, and the dotted line arrows shown in Fig.5B respectively point as used herein to the directions of water flow under the back-flushing working state.
FIG.5C is another lateral sectional view of the filter according to the above embodiment of the present invention, wherein the filter of the present invention which is shown in Fig.5C is under the back-flushing working state.
FIG.6 is a lateral sectional view of the filter according to the above embodiment of the present invention, wherein the filter shown in Fig.6 is under a rinse working state, and the dotted line arrows shown in Fig.6 respectively point as used herein to the directions of water flow under the rinse working state.
FIG.7 is a lateral sectional view of the filter according to the above embodiment of the present invention, wherein the filter of the present invention which is shown in Fig.7 is under a standby working state.
FIG.8 is a lateral sectional view of the filter according to the above embodiment of the present invention, wherein a water flow control valve of the filter shown in Fig.8 is under a pressure relief working position, and the dotted line arrows shown in Fig.8 respectively point as used herein to the directions of water flow under the pressure relief working state.
FIG.9A is a perspective view of a valve body of the water flow control valve of the filter according to the above embodiment of the present invention.
FIG.9B is a bottom view of the filtering device of the filter according to the above embodiment of the present invention.
FIG.9C is a longitudinal sectional view of the valve body of the water flow control valve of the filter according to the above embodiment of the present invention.
FIG.9D is a lateral sectional view of the valve body of the water flow control valve of the filter according to the above embodiment of the present invention.
FIG.10A is a perspective view of a cylindrical valve core of the water flow control valve of the filter according to the above embodiment of the present invention.
FIG.10B is another perspective view of a cylindrical valve core of the water flow control valve of the filter according to the above embodiment of the present invention.
FIG.10C is a longitudinal sectional view of the cylindrical valve core of the water flow control valve of the filter according to the above embodiment of the present invention.
FIG.10D is another longitudinal sectional view of the cylindrical valve core of the water flow control valve of the filter according to the above embodiment of the present invention.
FIG.10E is a lateral sectional view of the cylindrical valve core of the water flow control valve of the filter according to the above embodiment of the present invention.
FIG.10F is a bottom view of the cylindrical valve core of the water flow control valve of the filter according to the above embodiment of the present invention.
FIG.11A is a perspective view of a first body of the cylindrical valve core of the water flow control valve of the filter according to the above embodiment of the present invention.
FIG.11B is another perspective view of the first body of the cylindrical valve core of the water flow control valve of the filter according to the above embodiment of the present invention.
FIG.11C is a lateral sectional view of the first body of the cylindrical valve core of the water flow control valve of the filter according to the above embodiment of the present invention.
FIG.12 is a longitudinal sectional view of the filter according to the above embodiment of the present invention.

### DETAILED DESCRIPTION OF THE EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

Those skilled in the art should understand that, in the disclosure of the present invention, terminologies of "longitudinal", "lateral", "upper", "lower", "front", "back", "left", "right", "perpendicular", "horizontal", "top", "bottom", "inner", "outer" and etc. just indicate relations of direction or position are based on the relations of direction or position shown in the appended drawings, which is only to facilitate descriptions of the present invention and to simplify the descriptions, rather than to indicate or imply that the referred device or element must apply specific direction or to be operated or configured in specific direction. Therefore, the above-mentioned terminologies shall not be interpreted as confine to the present invention.

**It** will be understood that the term "a" should be understood as "at least one" or "one or more", that is, in one embodiment, the number of an element may be one, and in other embodiments, the number of the element can be greater than one, and the term "a" cannot be construed as a limitation to the quantity.

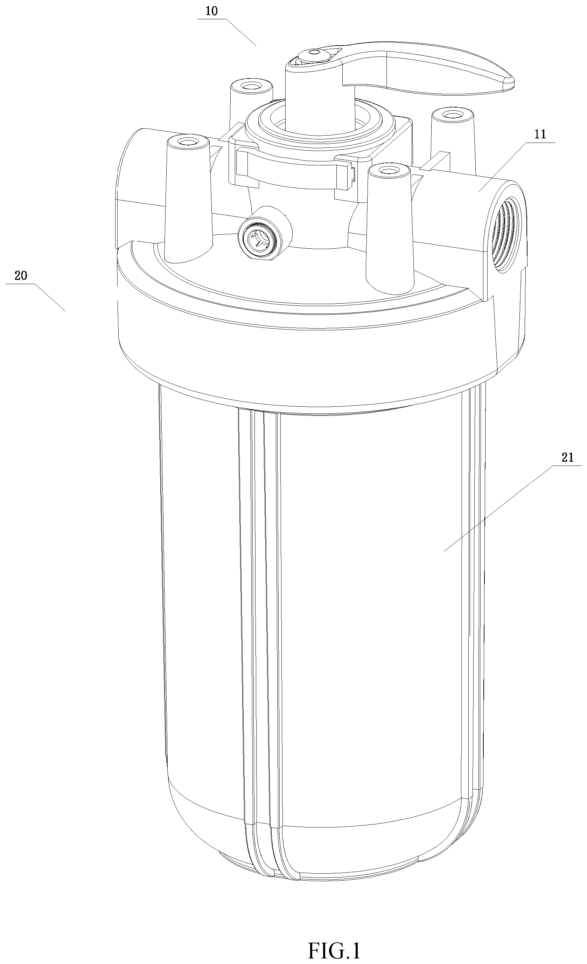

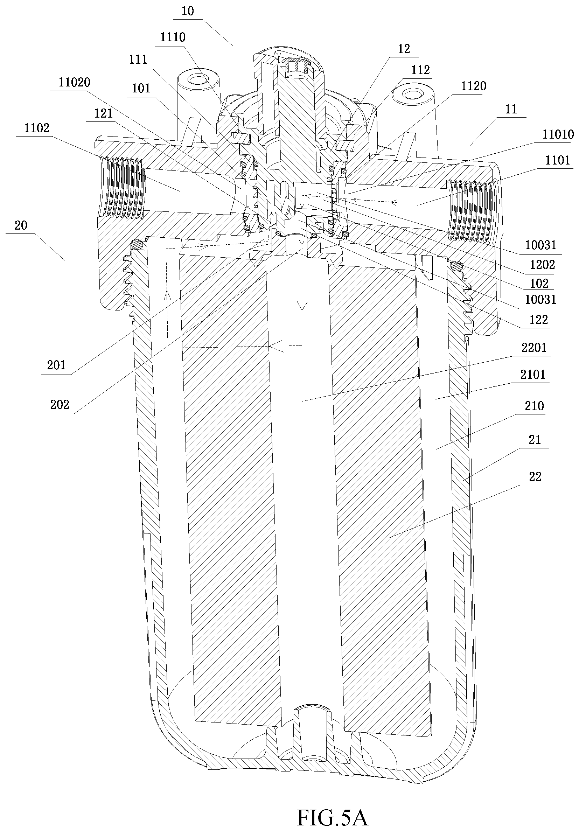

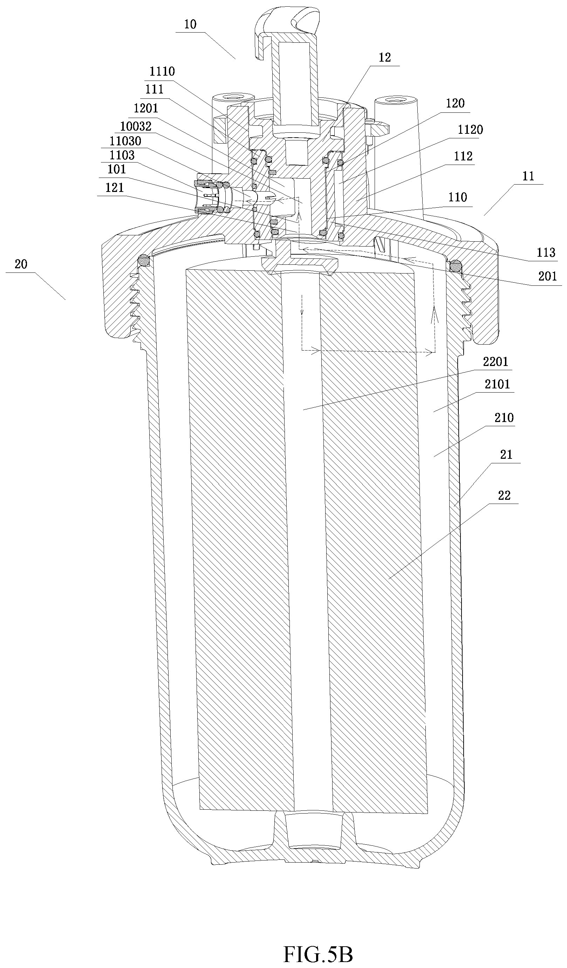

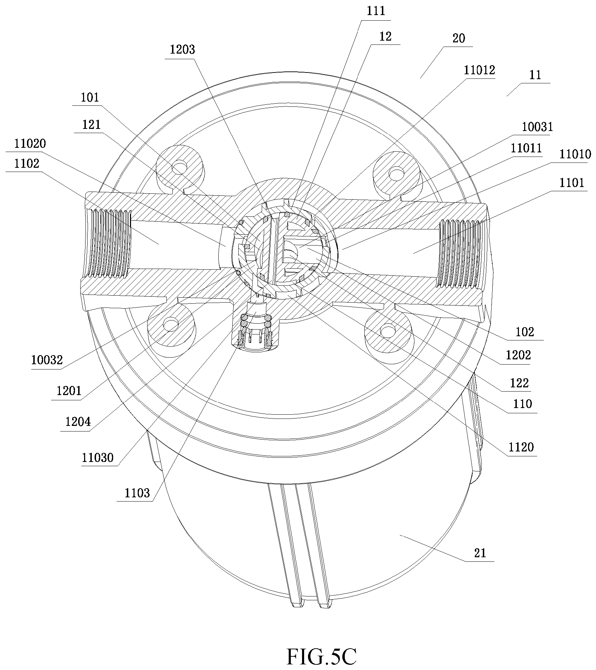

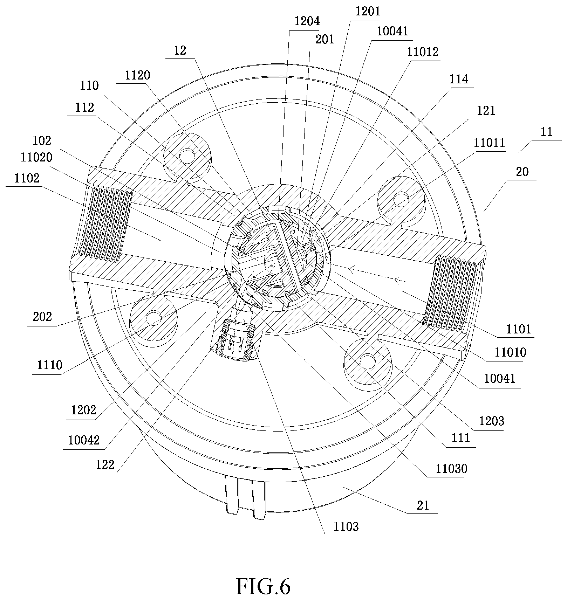

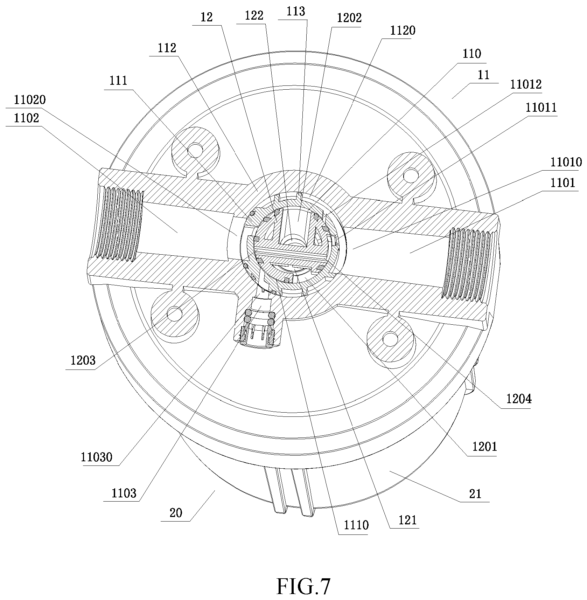

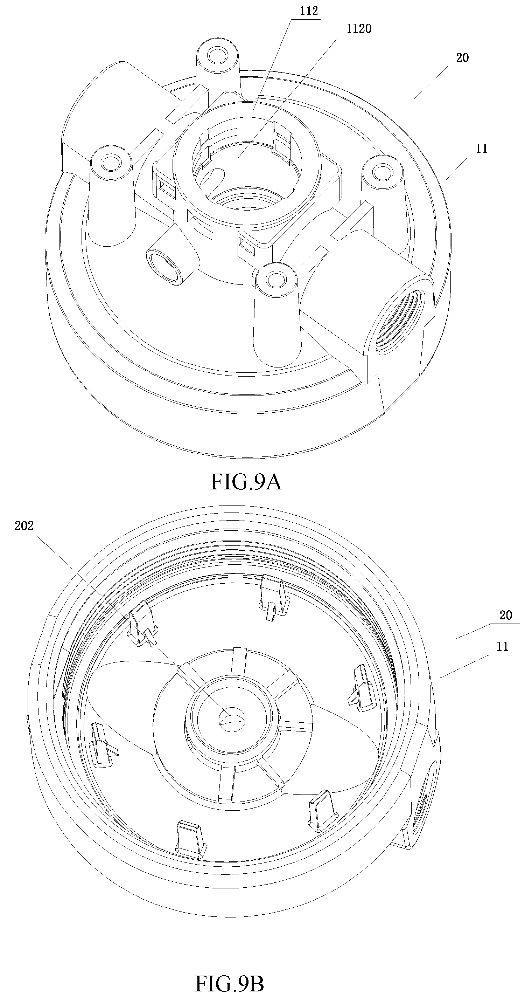

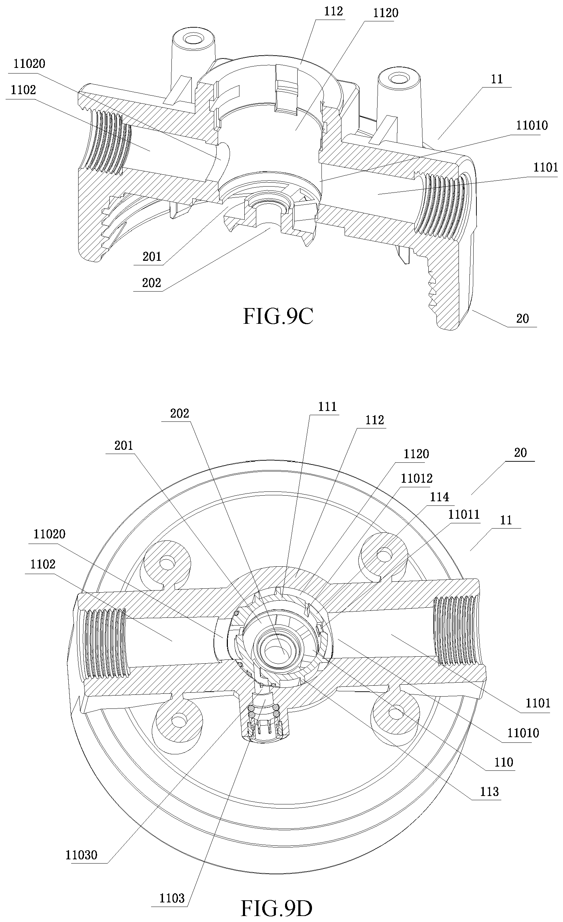

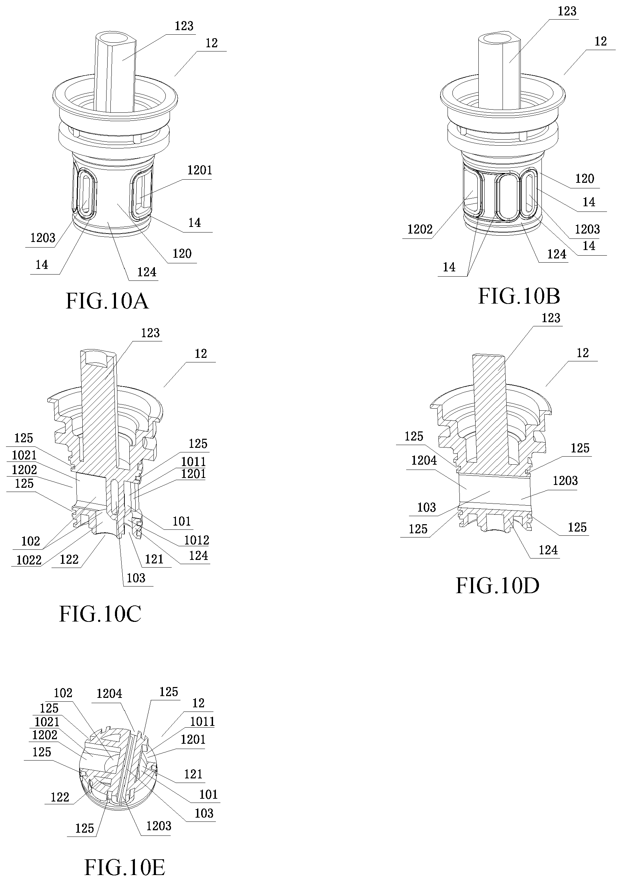

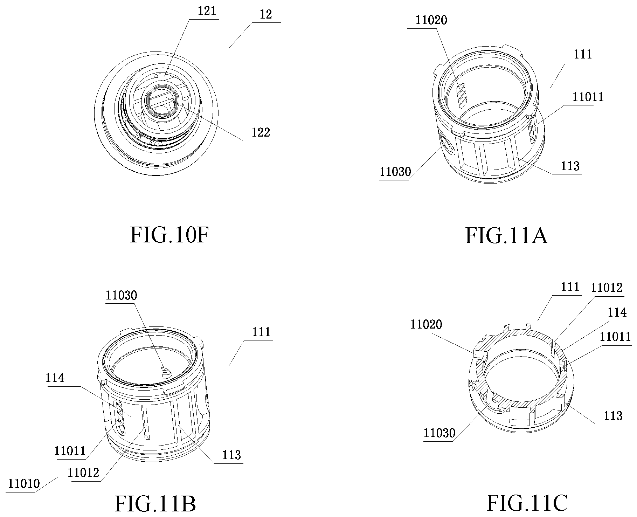

Referring to Figs.1 to 12 of the appended drawings, a filter according to an embodiment of the present invention is illustrated, wherein the filter of the present invention comprises a water flow control valve 10 and a filtering device 20, wherein the filtering device 20 has a first opening 201 and a second opening 202 to allow raw water to flow into the filtering device 20 through the first opening 201 and allow purified water to flow out of the filtering device 20 through the second opening 202, the water flow control valve 10 is provided for controlling the raw water (or tap water), such as controlling the supply of raw water to the filtering device 20 and controlling the supply of the purified water generated or produced by treating (filtering) the raw water by the filtering device 20. **It** can be understood that the water flow control valve 10 of the filter of the present invention is communicated with a tap water source, such as a tap water pipe. In other words, the water flow control valve 10 controls raw water (or tap water) to be supplied to the filtering device 20.

Referring to Figs.1 to 6, the filtering device 20 of the filter according to the embodiment of the present invention comprises an outer casing 21 and a filter cartridge 22, wherein the outer casing 21 defines a first accommodation cavity 210, wherein the filter cartridge 22 is disposed inside the first accommodation cavity 210 of the outer casing 21, and the outer casing 21 and the filter cartridge 22 define a raw water channel 2101 therebetween, the filter cartridge 22 defines a purified water channel 2201, wherein the first opening 201 of the filtering device 20 is communicated with the raw water channel 2101, and the second opening 202 is communicated with the purified water channel 2201. Correspondingly, when raw water flows into the raw water channel 2101 through the first opening 201 under the action of water pressure, and is treated by the filter cartridge 22 under the action of water pressure, the purified water generated flows out from the purified water channel 2201 of the filter cartridge 22, and the filter of the present invention is in a filtering (purification) working state or a rinse working state; when the raw water flows into the purified water channel 2201 from the second opening 202 under the action of water pressure, and flows into the raw water channel 2101 under the action of water pressure, and is discharged, the filter of the present invention is in a back-flushing working state. **It** is appreciated that the back-flushing mentioned herein refers to the flow direction of the raw water flowing through the filter cartridge 22 during the filter cartridge 22 being flushed is opposite to the flow direction of the raw water flowing through the filter cartridge 22 during the raw water being purified by the filter cartridge 22. The rinse mentioned herein refers to the flow direction of the raw water flowing through the filter cartridge 22 during the filter cartridge 22 being flushed is same to the flow direction of the raw water flowing through the filter cartridge 22 during the raw water being purified by the filter cartridge 22. Thereof, preferably, the raw water channel 2101 is located on one side (or outer side) of the filter cartridge 22, and the purified water channel 2201 is formed on an opposite side (or inner side) of the filter cartridge 22. Preferably, the filter cartridge 22 is a PP cotton filter cartridge, a carbon particle filter cartridge, a ceramic filter cartridge, a carbon rod filter cartridge, a carbon fiber filter cartridge, a stainless steel mesh filter cartridge, an ultrafiltration filter cartridge, or other similar filter cartridge. It is appreciated that the filter 22 may also be a filter made of other materials, or a composite filter made of multiple materials, for example, a composite filter composed of any two or more materials of ceramic, carbon fiber, PP cotton, activated carbon particles and resin material.

As shown in Figs.1 to 11C, the water flow control valve 10 of the filter according to the embodiment of the present invention is connected to the filtering device 20, wherein the water flow control valve 10 comprises a valve body 11 and a cylindrical valve core 12, wherein the valve body 11 defines a valve cavity 110, a water inlet channel 1101 and a water outlet channel 1102, the cylindrical valve core 12 has a control surface 120, a first fluid opening 121, a second fluid opening 122, a first communication opening 1201, a second communication opening 1202, a third communication opening 1203 and a fourth communication opening 1204, wherein the first communication opening 1201, the second communication opening 1202, the third communication opening 1203 and the fourth communication opening 1204 are separately formed at the control surface 120 of the cylindrical valve core 12, wherein the first fluid opening 121 is communicated with the first communication opening 1201, the second fluid opening 122 is respectively communicated with the second opening 202 and the second communication opening 1202, and the third communication opening 1203 is communicated with the fourth communication opening 1204, the water inlet channel 1101 of the valve body 11 is adapted to be communicated with a raw water source, wherein the cylindrical valve core 12 is rotatably arranged inside the valve cavity 110, and when the cylindrical valve core 12 is rotated to control the water flow control valve 10 in a filtering working position, the first fluid opening 121 of the cylindrical valve core 12 is communicated with the first opening 201, the first communication opening 1201 of the cylindrical valve core 12 is further communicated to the water inlet channel 1101 of the valve body 11, and the second communication opening 1202 of the cylindrical valve core 12 is further communicated to the water outlet channel 1102 of the valve body 11. Correspondingly, when the water flow control valve 10 is in the filtering working position, the raw water can flow from the water inlet channel 1101 to the first communication opening 1201 under the action of water pressure, and further flow into the filtering device 20 through the first fluid opening 121 and the first opening 201 of the filtering device 20, and the purified water generated after being filtered by the filter cartridge 22 of the filtering device 20 flows through the second opening 202 to the second fluid opening 122, and further flows to the second communication opening 1202 through the second fluid opening 122, and then flows out through the water outlet channel 1102. Preferably, when the water flow control valve 10 is in the filtering working position, the third communication opening 1203 and the fourth communication opening 1204 of the cylindrical valve core 12 are both blocked by an inner wall 1110 of the valve body 11. Preferably, the first fluid opening 121 is formed at a position of the cylindrical valve core 11 which is adjacent to the first opening 201 of the filtering device 20, and the second fluid opening 122 is formed at another position of the cylindrical valve core 11 which is adjacent to the second opening 202 of the filtering device 20. It is appreciated that when the water flow control valve 10 of the filter according to the embodiment of the present invention is controlled under the filtering working position, the filter of the present invention is controlled under its filtering working state. It can be understood that the valve cavity 110 of the valve body 11 is cylindrical.

It is worth mentioning that the valve core 12 of the water flow control valve 10 is cylindrical, therefore, the control surface 120 of the valve core 12 of the water flow control valve 10 and the inner wall 1110 of the valve cavity 110 of the valve body 11 are key mechanisms for controlling the water flow. Preferably, the water inlet channel 1101 and the water outlet channel 1102 are outwardly extended from the inner wall 1110 of the valve cavity 110 respectively, and the first communication opening 1201, the second communication opening 1202, the third communication opening 1203, and the fourth communication opening 1204 are arranged to face the inner wall 1110 of the valve cavity 110.

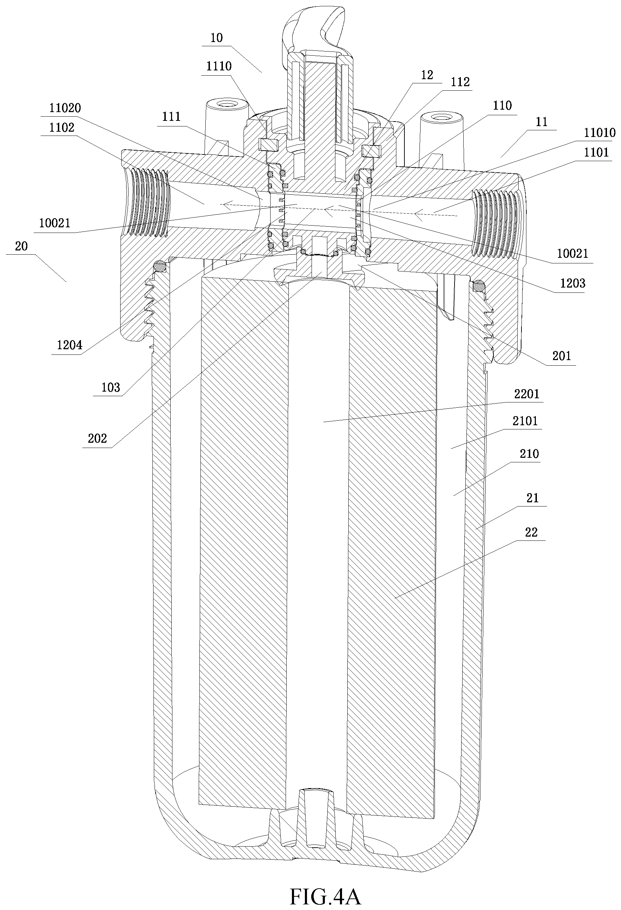

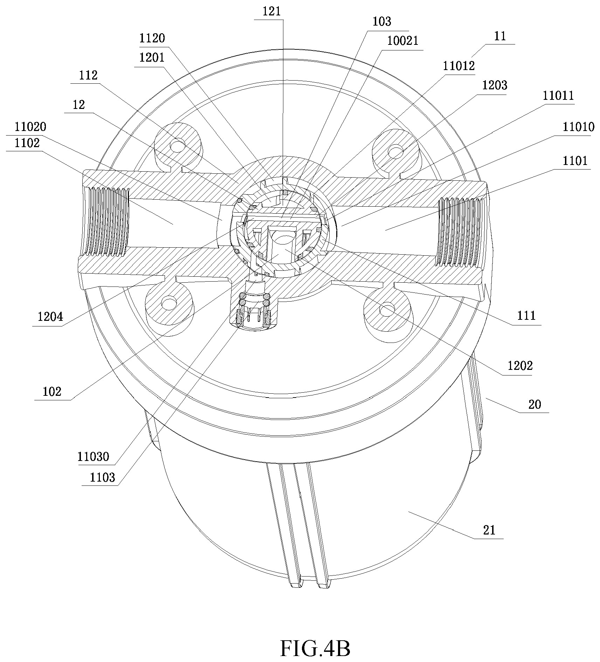

As shown in Figs 4A and 4B, further, the cylindrical valve core 12 of the water flow control valve 10 of the filter according to the embodiment of the present invention can be rotated to control the water flow control valve 10 in a raw water supply working position, wherein when the water flow control valve 10 is in the raw water supply working position, the third communication opening 1203 of the cylindrical valve core 12 is communicated to the water inlet channel 1101 of the valve body 11, and the fourth communication opening 1204 of the cylindrical valve core 12 is communicated to the water outlet channel 1102 of the valve body 11. Correspondingly, when the water flow control valve 10 is in the raw water supply working position, the raw water can flow from the water inlet channel 1101 to the third communication opening 1203 under the action of water pressure, then flow to the water outlet channel 1102 through the fourth communication opening 1204, and then flow out through the water outlet channel 1102. Preferably, when the water flow control valve 10 is in the raw water supply working position, the second communication opening 1202 of the cylindrical valve core 12 is blocked by the inner wall 1110 of the valve body 11, and the first communication opening 1201 of the cylindrical valve core 12 is blocked by the inner wall 1110 of the valve body 11. It is appreciated that when the water flow control valve 10 of the filter according to the embodiment of the present invention is controlled under the raw water supply working position, the filter of the present invention is controlled under its raw water supply working state.

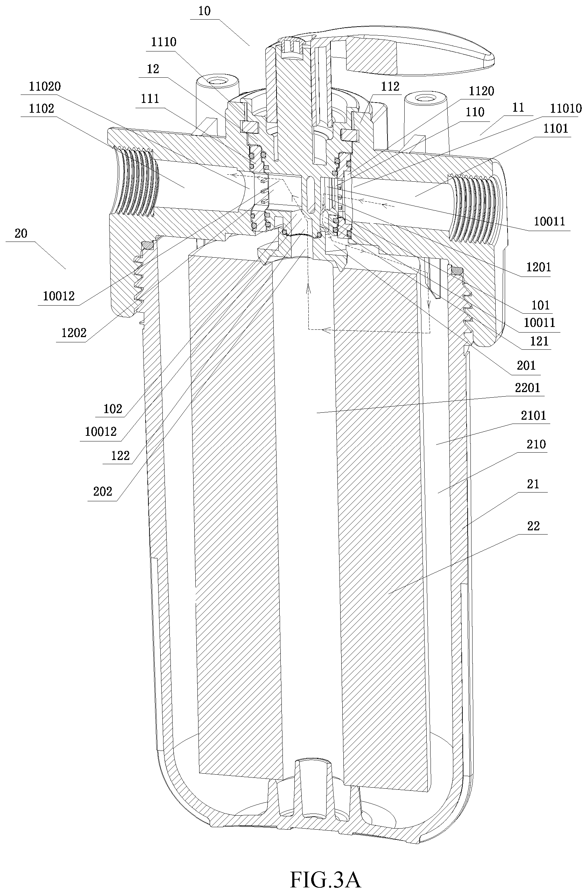

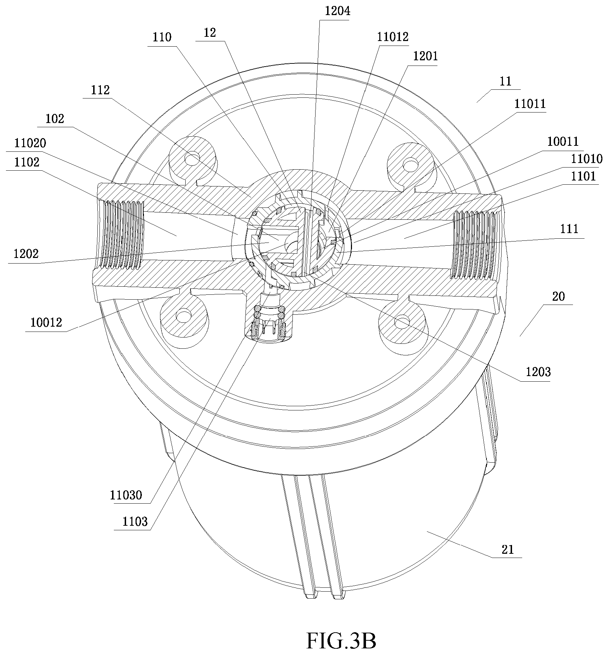

As shown in Figs.3A to 11C, the water inlet channel 1101 of the valve body 11 of the water flow control valve 10 of the filter according to the embodiment of the present invention has a water inlet opening 11010, and the water outlet channel 1102 has a water outlet opening 11020, wherein the water inlet opening 11010 of the water inlet channel 1101 and the water outlet opening 11020 of the water outlet channel 1102 are spacedly formed on the inner wall 1110 of the valve cavity 110, wherein when the water flow control valve 10 is in the filtering working position, the first communication opening 1201 of the cylindrical valve core 12 is communicated to the water inlet opening 11010 of the water inlet channel 1101 of the valve body 11, and the second communication opening 1202 of the cylindrical valve core 12 is communicated to the water outlet opening 11020 of the water outlet channel 1102 of the valve body 11, so that the raw water can flow from the water inlet channel 1101 to the first communication opening 1201 under the action of water pressure, and then flow into the filtering device 20 through the first fluid opening 121 and the first opening 201 of the filtering device 20, the purified water generated by filtering the raw water through the filter cartridge 22 of the filtering device 20 flows into the second fluid opening 122 through the second opening 202, and further flows into the second communication opening 1202 through the second fluid opening 122, and then flows out through the water outlet channel 1102; when the water flow control valve 10 is in the raw water supply working position, the third communication opening 1203 of the cylindrical valve core 12 is communicated to the water inlet opening 11010 of the water inlet channel 1101 of the valve body 11, and the fourth communication opening 1204 of the cylindrical valve core 12 is communicated to the water outlet opening 11020 of the water outlet channel 1102 of the valve body 11, so that raw water can flow from the water inlet channel 1101 to the third communication opening 1203 under the action of water pressure, then flow through the fourth communication opening 1204 to the water outlet channel 1102, and then flow out through the water outlet channel 1102.

As shown in Figs.3A to 11C, preferably, the first communication opening 1201, the second communication opening 1202, the third communication opening 1203 and the fourth communication opening 1204 of the cylindrical valve core 12 of the water flow control valve 10 of the filter according to the embodiment of the present invention, the water inlet opening 11010 of the water inlet channel 1101 and the water outlet opening 11020 of the water outlet channel 1102 of the valve body 11 have the same height, and the first communication opening 1201, the second communication opening 1202, the third communication opening 1203 and the fourth communication opening 1204 of the cylindrical valve core 12, the water inlet opening 11010 of the water inlet channel 1101 and the water outlet opening 11020 of the water outlet channel 1102 of the valve body 11 are arranged so that when the cylindrical valve core 12 is rotated to further communicate the first communication opening 1201 of the cylindrical valve core 12 with the water inlet opening 11010 of the water inlet channel 1101 of the valve body 11 and communicate the second communication opening 1202 of the cylindrical valve core 12 with the water outlet opening 11020 of the water outlet channel 1102 of the valve body 11, the third communication opening 1203 and the fourth communication opening 1204 of the cylindrical valve core 12 are both blocked by the inner wall 1110 of the valve body 11, the water flow control valve 10 is in the filtering working position. As shown in Figs.3A to 11C, preferably, the first communication opening 1201, the second communication opening 1202, the third communication opening 1203 and the fourth communication opening 1204 of the cylindrical valve core 12 of the water flow control valve 10 of the filter according to the embodiment of the present invention, the water inlet opening 11010 of the water inlet channel 1101 and the water outlet opening 11020 of the water outlet channel 1102 of the valve body 11 have the same height, and the first communication opening 1201, the second communication opening 1202, the third communication opening 1203 and the fourth communication opening 1204 of the cylindrical valve core 12, the water inlet opening 11010 of the water inlet channel 1101 and the water outlet opening 11020 of the water outlet channel 1102 of the valve body 11 are arranged so that when the cylindrical valve core 12 is rotated to further communicate the third communication opening 1203 of the cylindrical valve core 12 with the water inlet opening 11010 of the water inlet channel 1101 of the valve body 11 and communicate the fourth communication opening 1204 of the cylindrical valve core 12 with the water outlet opening 11020 of the water outlet channel 1102 of the valve body 11, the second communication opening 1202 is blocked by the inner wall 1110 of the valve body 11 and the first communication opening 1201 of the cylindrical valve core 12 is blocked by the inner wall 1110 of the valve body 11, the water flow control valve 10 is in the raw water supply working position.

As shown in Figs.3A to 11C, the valve body 11 of the water flow control valve 10 of the filter according to the embodiment of the present invention further forms a draining channel 1103 having a draining opening 11030, wherein the draining opening 11030 of the draining channel 1103, the water inlet opening 11010 of the water inlet channel 1101, and the water outlet opening 11020 of the water outlet channel 1102 are spacedly formed in the inner wall 1110 of the valve cavity 110, wherein the first communication opening 1201, the second communication opening 1202, the third communication opening 1203 and the fourth communication opening 1204 of the cylindrical valve core 12, the water inlet opening 11010 of the water inlet channel 1101 and the water outlet opening 11020 of the water outlet channel 1102 of the valve body 11 have the same height,
and the first communication opening 1201, the second communication opening 1202, the third communication opening 1203 and the fourth communication opening 1204 of the cylindrical valve core 12, the water inlet opening 11010 of the water inlet channel 1101, the water outlet opening 11020 of the water outlet channel 1102, and the draining opening 11030 of the draining channel 1103 of the valve body 11 are arranged so that when the cylindrical valve core 12 is rotated to further communicate the second communication opening 1202 of the cylindrical valve core 12 with the draining opening 11030 of the draining channel 1103 of the valve body 11, the first communication opening 1201 of the cylindrical valve core 12 is blocked by the inner wall 1110 of the valve body. When the second communication opening 1202 of the cylindrical valve core 12 is further communicated to the draining opening 11030 of the draining channel 1103 of the valve body 11 and the first communication opening 1201 of the cylindrical valve core 12 is blocked by the inner wall 1110 of the valve body, the second communication opening 1202 of the cylindrical valve core 12 is respectively communicated to the second fluid opening 122 and the draining channel 1103 of the valve body 11, so that the internal water pressure of the filtering device 20 can be released through a pressure relief channel formed by the second opening 202, the second fluid opening 122, the second communication opening 1202, and the draining channel 1103 of the valve body 11, and the (water) pressure inside the filtering device 20 is released without using any additional pressure relief mechanism, so as to reduce the difficulty of disassembling the filtering device 20 from the water flow control valve 10, significantly.

As shown in Figs.3A to 11C, preferably, the draining opening 11030 of the draining channel 1103 of the valve body 11 of the water flow control valve 10 of the filter according to the embodiment of the present invention is arranged between the water inlet opening 11010 of the water inlet channel 1101 and the water outlet opening 11020 of the water outlet channel 1102, so that when a user actually uses the filter and the cylindrical valve core 12 is rotated counterclockwise (or possibly clockwise) to switch it from the filtering working position to the raw water supply working position, the water flow control valve 10 will automatically release the (water) pressure inside the filtering device 20, therefore, when the user needs to replace the filter cartridge 22 of the filtering device 20, the user does not need to control the water flow control valve 10 to remain in a pressure relief working position, he or she only needs to rotate the cylindrical valve core 12 to switch it from the filtering working position to the raw water supply working position. In this way, the filter of the present invention is controlled to provide raw water while also creating better conditions for the replacement of the filter cartridge 22 of the filtering device 20. In other words, the water flow control valve 10 of the filter of the present invention is designed to maintain a continuous water supply of the filter of the present invention while releasing the (water) pressure inside the filtering device 20 when switching from the filtering working position to the raw water supply working position, greatly facilitating the user to replace the filter cartridge 22 of the filtering device 20, and even allowing the user to replace the filter cartridge 22 of the filtering device 20 of the present invention without using any external tools. More preferably, the draining channel 1103 is outwardly extended from the inner wall 1110 of the valve cavity 110.

As shown in Figs.3A to 11C, preferably, the first communication opening 1201, the third communication opening 1203, the second communication opening 1202 and the fourth communication opening 1204 of the cylindrical valve core 12 of the water flow control valve 10 of the filter according to the embodiment of the present invention are formed clockwise in this order in the control surface 120 of the cylindrical valve core 12, the water inlet opening 11010 of the water inlet channel 1101, the draining opening 11030 of the draining channel 1103 and the water outlet opening 11020 of the water outlet channel 1102 of the valve body 11 are formed clockwise in this order in the inner wall 1110 of the valve body 11, so that when the cylindrical valve core 12 of the water flow control valve 10 is counterclockwise rotated to be switched from the filtering working position to the raw water supply working position, the (water) pressure inside the filtering device 20 is released. Optionally, the first communication opening 1201, the third communication opening 1203, the second communication opening 1202 and the fourth communication opening 1204 of the cylindrical valve core 12 are formed counterclockwise in this order in the control surface 120 of the cylindrical valve core 12, the water inlet opening 11010 of the water inlet channel 1101, the draining opening 11030 of the draining channel 1103 and the water outlet opening 11020 of the water outlet channel 1102 of the valve body 11 are formed counterclockwise in this order in the inner wall 1110 of the valve body 11, so that when the cylindrical valve core 12 of the water flow control valve 10 is clockwise rotated to switch from the filtering working position to the raw water supply working position, the (water) pressure inside the filtering device 20 is released.

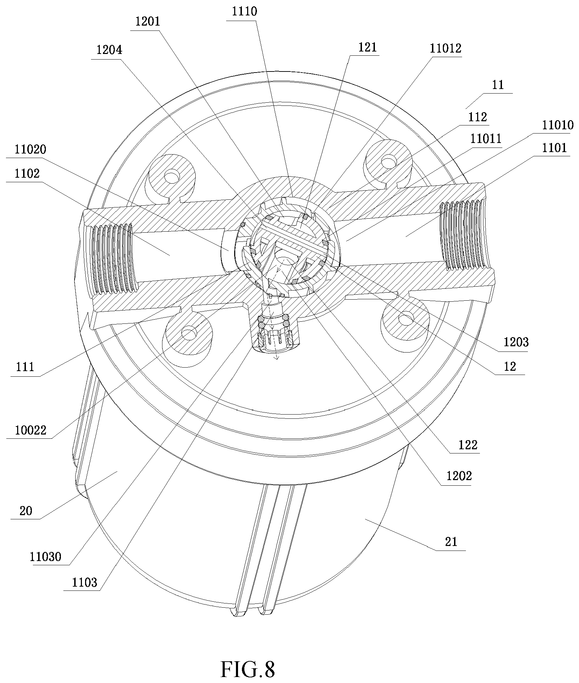

As shown in Fig 8, further, the water flow control valve 10 of the filter according to the embodiment of the present invention can be provided to has a pressure relief working position, wherein when the water flow control valve 10 is in the pressure relief working position, the second communication opening 1202 of the cylindrical valve core 12 is respectively communicated to the second fluid opening 122 and the drain channel 1103 of the valve body 11, and the first communication opening 1201 of the cylindrical valve core 12 is blocked by the inner wall 1110 of the valve body. At this time, the internal water pressure of the filtering device 20 can be released through the pressure relief channel formed by the second opening 202, the second fluid opening 122, the second communication opening 1202 and the draining channel 1103 of the valve body 11, so that the (water) pressure inside the filtering device 20 is released without using any additional pressure relief mechanism, so as to reduce the difficulty of disassembling the filtering device 20 from the water flow control valve 10, significantly. Correspondingly, the user can easily remove the filtering device 20 from the water flow control valve 10, even without any external tools, significantly facilitating the replacement of the filter cartridge 22 of the filtering device 20.

As shown in Figs.3A to 11C, preferably, the first communication opening 1201, the second communication opening 1202, the third communication opening 1203 and the fourth communication opening 1204 of the cylindrical valve core 12 of the water flow control valve 10 of the filter according to the embodiment of the present invention, the water inlet opening 11010 of the water inlet channel 1101, the water outlet opening 11020 of the water outlet channel 1102 and the draining opening 11030 of the draining channel 1103 of the valve body 11 have the same height, and the first communication opening 1201, the second communication opening 1202, the third communication opening 1203 and the fourth communication opening 1204 of the cylindrical valve core 12, the water inlet opening 11010 of the water inlet channel 1101 and the water outlet opening 11020 of the water outlet channel 1102 of the valve body 11 are arranged so that when the cylindrical valve core 12 is rotated to communicate the second communication opening 1202 of the cylindrical valve core 12 with the water inlet opening 11010 of the water inlet channel 1101 of the valve body 11 and communicate the first communication opening 1201 of the cylindrical valve core 12 with the draining opening 11030 of the draining channel 1103 of the valve body 11, the third communication opening 1203 and the fourth communication opening 1204 of the cylindrical valve core 12 are both blocked by the inner wall 1110 of the valve body 11, the water flow control valve 10 is in a back-flushing working position.

As shown in Figs.3A to 11C, preferably, the first communication opening 1201, the second communication opening 1202, the third communication opening 1203 and the fourth communication opening 1204 of the cylindrical valve core 12 of the water flow control valve 10 of the filter according to the embodiment of the present invention, the water inlet opening 11010 of the water inlet channel 1101, the water outlet opening 11020 of the water outlet channel 1102 and the draining opening 11030 of the draining channel 1103 of the valve body 11 have the same height, and the first communication opening 1201, the second communication opening 1202, the third communication opening 1203 and the fourth communication opening 1204 of the cylindrical valve core 12, the water inlet opening 11010 of the water inlet channel 1101 and the water outlet opening 11020 of the water outlet channel 1102 of the valve body 11 are arranged so that when the cylindrical valve core 12 is rotated to make the first communication opening 1201, the second communication opening 1202 and the third communication opening 1203 of the cylindrical valve core 12 are blocked by the inner wall 1110 of the valve body 11, the water flow control valve 10 is in a standby working position.

As shown in Figs.3A to 11C, preferably, the first communication opening 1201, the second communication opening 1202, the third communication opening 1203 and the fourth communication opening 1204 of the cylindrical valve core 12 of the water flow control valve 10 of the filter according to the embodiment of the present invention, the water inlet opening 11010 of the water inlet channel 1101, the water outlet opening 11020 of the water outlet channel 1102 and the draining opening 11030 of the draining channel 1103 of the valve body 11 have the same height, and the first communication opening 1201, the second communication opening 1202, the third communication opening 1203 and the fourth communication opening 1204 of the cylindrical valve core 12, the water inlet opening 11010 of the water inlet channel 1101 and the water outlet opening 11020 of the water outlet channel 1102 of the valve body 11 are arranged so that when the cylindrical valve core 12 is rotated to communicate the first communication opening 1201 of the cylindrical valve core 12 with the water inlet opening 11010 of the water inlet channel 1101 of the valve body 11 and communicate the second communication opening 1202 of the cylindrical valve core 12 with the draining opening 11030 of the draining channel 1103 of the valve body 11, the third communication opening 1203 and the fourth communication opening 1204 of the cylindrical valve core 12 are both blocked by the inner wall 1110 of the valve body 11, the water flow control valve 10 is in a rinse working position.

As shown in Figs.3A to 11C, preferably, the first communication opening 1201, the second communication opening 1202, the third communication opening 1203, the fourth communication opening 1204 of the cylindrical valve core 12 of the water flow control valve 10 of the filter according to the embodiment of the present invention, the water inlet opening 11010 of the water inlet channel 1101, the water outlet opening 11020 of the water outlet channel 1102 and the draining opening 11030 of the draining channel 1103 of the valve body 11 have the same height, and the first communication opening 1201, the third communication opening 1203, the second communication opening 1202, the fourth communication opening 1204 of the cylindrical valve core 12 are formed clockwise in this order in the control surface 120 of the cylindrical valve core 12, the water inlet opening 11010 of the water inlet channel 1101, the draining opening 11030 of the draining channel 1103 and the water outlet opening 11020 of the water outlet channel 1102 of the valve body 11 are formed clockwise in this order in the inner wall 1110 of the valve body 11, so that when the water flow control valve 10 is in the filtering working position, the water flow control valve 10 can be switched to the raw water supply position by rotating counterclockwise the cylindrical valve core 12 for a proper angel; when the water flow control valve 10 is in the raw water supply position, the water flow control valve 10 can be switched to the back-flushing working position by rotating counterclockwise the cylindrical valve core 12 for a proper angel; when the water flow control valve 10 is in the back-flushing working position, the water flow control valve 10 can be switched to the standby working position by rotating counterclockwise the cylindrical valve core 12 for a proper angel. More preferably, the first communication opening 1201, the second communication opening 1202, the third communication opening 1203, the fourth communication opening 1204 of the cylindrical valve core 12, the water inlet opening 11010 of the water inlet channel 1101, the water outlet opening 11020 of the water outlet channel 1102, and the draining opening 11030 of the draining channel 1103 of the valve body 11 are further arranged so that when the water flow control valve 10 is in the filtering working position, the water flow control valve 10 can be switched to the raw water supply working position by rotating the cylindrical valve core 12 counterclockwise by substantially 90 degrees (or 90 ± 5 degrees); when the water flow control valve 10 is in the raw water supply working position, the cylindrical valve core 12 can be rotated counterclockwise by substantially 90 degrees (or 90 ± 5 degrees) to be switched to the back-flushing working position; when the water flow control valve 10 is in the back-flushing working position, the cylindrical valve core 12 can be rotated counterclockwise by substantially 90 degrees (or 90 ± 5 degrees) to be switched to the standby working position. Further, when the water flow control valve 10 is in the filtering working position, the cylindrical valve core 12 can be rotated counterclockwise by substantially 45 degrees (or 45 ± 5 degrees) to be switched to the rinse working position. Preferably, a connection line between the third communication opening 1203 and the fourth communication opening 1204 of the cylindrical valve core 12 deviates from a central axis of the cylindrical valve core 12 (or does not pass through the central axis of the cylindrical valve core 12), so that when the cylindrical valve core 12 is rotated (180 degrees) to be switched from the raw water supply working position to the standby working position, the third communication opening 1203 of the cylindrical valve core 12 is blocked by the inner wall 1110 of the valve body 11.

It is appreciated that when the first communication opening 1201, the third communication opening 1203, the second communication opening 1202 and the fourth communication opening 1204 of the cylindrical valve core 12 are formed counterclockwise in this order in the control surface 120 of the cylindrical valve core 12 and the water inlet opening 11010 of the water inlet channel 1101, the draining opening 11030 of the draining channel 1103 and the water outlet opening 11020 of the water outlet channel 1102 of the valve body 11 are formed counterclockwise in this order in the inner wall 1110 of the valve body 11, the cylindrical valve core 12 of the water flow control valve 12 can be clockwise rotated to be switched to the filtering working position, (the rinse working position), the raw water supply working position, the back-flushing working position and the standby working position sequentially.

As shown in Figs.3A to 11C, correspondingly, the first communication opening 1201 and the second communication opening 1202 of the cylindrical valve core 12 of the water flow control valve 10 of the filter according to the embodiment of the present invention is arranged to be selectively communicated to the water inlet opening 11010 of the water inlet channel 1101, the water outlet opening 11020 of the water outlet channel 1102 and the draining opening 11030 of the draining channel 1103, and the third communication opening 1203 and the fourth communication opening 1204 of the cylindrical valve core 12 is arranged to be selectively communicated to the water inlet channel 1101 and the water outlet channel 1102.As shown in Figs.3A to 11C, the draining channel 1103 of the valve body 11 of the water flow control valve 10 of the filter according to the embodiment of the present invention has the draining opening 11030, wherein the draining opening 11030 of the draining channel 1103, the water inlet opening 11010 of the water inlet channel 1101, and the water outlet opening 11020 of the water outlet channel 1102 are spacedly formed in the inner wall 1110 of the valve chamber 110, wherein when the water flow control valve 10 is in the pressure relief working position, the second communication opening 1202 of the cylindrical valve core 12 is respectively communicated with the second fluid opening 122 and the draining opening 11030 of the draining channel 1103 of the valve body 11, and the first connecting opening 1201 is blocked by the inner wall 1110 of the valve body, so that the internal water pressure of the filtering device 20 can be released through a pressure relief channel formed by the second opening 202 of the filtering device 20 and the second fluid opening 122, the second communication opening 1202, the draining channel 1103 of the valve body 11 and the difficulty of disassembling the filtering device 20 from the water flow control valve 10 can be reduced. Preferably, the second communication opening 1202 of the cylindrical valve core 12 has a width larger than the draining opening 11030 of the draining channel 1103, so that the water flow control valve 10 of the filter of the present invention can extend the duration of communication between the second communication opening 1202 of the cylindrical valve core 12 and the draining opening 11030 of the draining channel 1103 during the process of switching from the filtering working position to the raw water supply working position, which helps the water pressure inside the filtering device 20 be completely released.

As shown in Figs.3A to 11C, further, the cylindrical valve core 12 of the water flow control valve 10 of the filter according to the embodiment of the present invention can be rotated to control the water flow control valve 10 in a back-flushing working position, wherein when the water flow control valve 10 is in the back-flushing working position, the second communication opening 1202 of the cylindrical valve core 12 is communicated to the water inlet channel 1101 of the valve body 11, the second fluid opening 122 of the cylindrical valve core 12 is communicated with the second opening 202, the first fluid opening 121 of the cylindrical valve core 12 is communicated with the first opening 201, and the first communication opening 1201 of the cylindrical valve core 12 is communicated to the draining channel 1103 of the valve body 11. Correspondingly, when the water flow control valve 10 is in the back-flushing working position, the raw water can flow from the water inlet channel 1101 to the second communication opening 1202 under the action of water pressure, and further flow into the filtering device 20 through the second fluid opening 122 and the second opening 202 of the filtering device 20, and the draining water generated after the filter cartridge 22 of the filtering device 20 being back-flushed flows through the first opening 201 to the first fluid opening 121, and further flows to the first communication opening 1201 through the first fluid opening 121, and then flows out through the draining channel 1103. It is appreciated that when the water flow control valve 10 of the filter according to the embodiment of the present invention is controlled under the back-flushing working position, the filter of the present invention is controlled under its back-flushing working state. In other words, the water flow control valve 10 of the filter of the present invention can selectively control the raw water flow to be filtered and treated by the filter cartridge 22 of the filtering device 20 to obtain purified water, or directly provided to supply raw water, or back-flush the filter cartridge 22 of the filtering device 20, so that users can easily obtain purified water through the filter of the present invention, or easily replace the filter cartridge without stopping the water supply, or back-flush the filter cartridge to restore its filtering function when the filter cartridge is blocked. Preferably, when the water flow control valve 10 is in the back-flushing working position, the third communication opening 1203 and the fourth communication opening 1204 of the cylindrical valve core 12 are both blocked by the inner wall 1110 of the valve body 11. Correspondingly, the valve core 12 of the water flow control valve 10 of the filter of the present invention is a cylindrical valve core, and it can control the flow of water, thereby enabling the filter of the present invention to achieve water filtration function, back-flushing function, and raw water supply function. Correspondingly, when the water flow control valve 10 is in the back-flushing working position, the second communication opening 1202 of the cylindrical valve core is communicated to the water inlet channel 1101 of the valve body 11, the second fluid opening 122 of the cylindrical valve core 12 is communicated with the second opening 202, the first fluid opening 121 of the cylindrical valve core 12 is further communicated with the first opening 201, and the first communication opening 1201 of the cylindrical valve core 12 is communicated to the draining opening 11030 of the draining channel 1103 of the valve body 11, so that the raw water can flow from the water inlet channel 1101 to the second communication opening 1202 under the action of water pressure, and further flow into the filtering device 20 through the second fluid opening 122 and the second opening 202 of the filtering device 20, and the draining water generated after the filter cartridge 22 of the filtering device 20 being back-flushed flows through the first opening 201 to the first fluid opening 121, and further flows to the first communication opening 1201 through the first fluid opening 121, and then flows out through the draining channel 1103.

As shown in Figs.3A to 11C, further, the cylindrical valve core 12 of the water flow control valve 10 of the filter according to the embodiment of the present invention can be rotated to control the water flow control valve 10 in the standby working position, wherein when the water flow control valve 10 is in the standby working position, the first communication opening 1201, the second communication opening 1202 and the third communication opening 1203 of the cylindrical valve core 12 are respectively blocked by the inner wall 1110 of the valve body 11. Correspondingly, the raw water cannot flow to the filtering device 20 through the cylindrical valve core 12 of the water flow control valve 10, nor can it flow to the water outlet channel 1102 through the cylindrical valve core 12 of the water flow control valve 10.

As shown in Figs.3A to 11C, further, the cylindrical valve core 12 of the water flow control valve 10 of the filter according to the embodiment of the present invention can be rotated to control the water flow control valve 10 in the rinse working position, wherein when the water flow control valve 10 is in the rinse working position, the first communication opening 1201 of the cylindrical valve core 12 is communicated to the water inlet channel 1101 of the valve body 11 (or the water inlet opening 11010 of the water inlet channel 1101), the first fluid opening 121 of the cylindrical valve core 12 is further communicated with the first opening 201, the second fluid opening 122 of the cylindrical valve core 12 is communicated with the second opening 202, and the second communication opening 1202 of the cylindrical valve core 12 is communicated to the draining channel 1103 of the valve body 11 (or the draining opening 11030 of the draining channel 1103). Correspondingly, when the water flow control valve 10 is in the rinse working position, the raw water can flow from the water inlet channel 1101 to the first communication opening 1201 under the action of water pressure, and further flow into the filtering device 20 through the first fluid opening 121 and the first opening 201 of the filtering device 20, and the draining water generated after the filter cartridge 22 of the filtering device 20 being rinsed flows through the second opening 202 to the second fluid opening 122, and further flows to the second communication opening 1202 through the second fluid opening 122, and then flows out through the draining channel 1103. It is appreciated that when the water flow control valve 10 of the filter according to the embodiment of the present invention is controlled under the rinse working position, the filter of the present invention is controlled under its rinse working state. The water flow control valve 10 of the filter of the present invention can selectively control the forward flow of raw water to rinse the filter cartridge 22 of the filtering device 20, so that the user can rinse the filter cartridge 22 in the forward direction after back-flushing the filter, to clean the raw water (including the dirt carried by the raw water) being remained in the purified water channel 2201 of the filter cartridge 22 after back-flushing the filter cartridge 22 and prevent it from affecting the quality of purified water. Preferably, when the water flow control valve 10 is in the rinse working position, the third communication opening 1203 and the fourth communication opening 1204 of the cylindrical valve core 12 are both blocked by the inner wall 1110 of the valve body 11. Correspondingly, when the water flow control valve 10 is in the rinse working position, the first communication opening 1201 of the cylindrical valve core is communicated to the water inlet opening 11010 of the water inlet channel 1101 of the valve body 11, the first fluid opening 121 of the cylindrical valve core 12 is communicated with the first opening 201, the second fluid opening 122 of the cylindrical valve core 12 is further communicated with the second opening 202, and the second communication opening 1202 of the cylindrical valve core 12 is communicated to the draining opening 11030 of the draining channel 1103 of the valve body 11, so that the raw water can flow from the water inlet channel 1101 to the first communication opening 1201 under the action of water pressure, and further flow into the filtering device 20 through the first fluid opening 121 and the first opening 201 of the filtering device 20, and the draining water generated after the filter cartridge 22 of the filtering device 20 being rinsed flows through the second opening 202 to the second fluid opening 122, and further flows to the second communication opening 1202 through the second fluid opening 122, and then flows out through the draining channel 1103. Correspondingly, the valve core 12 of the water flow control valve 10 of the filter of the present invention is a cylindrical valve core, and it can control the flow of water, thereby enabling the filter of the present invention to achieve rinse function and standby function.

As shown in Figs.3A to 11C, the cylindrical valve core 12 of the water flow control valve 10 of the filter according to the embodiment of the present invention further has a first channel 101, a second channel 102 and a third channel 103, wherein the first fluid opening 121 and the first communication opening 1201 are communicated through the first channel 101, the second fluid opening 122 and the second communication opening 1202 are communicated through the second channel 102, and the third communication opening 1203 and the fourth communication opening 1204 are communicated through the third channel 103. Preferably, both the first channel 101 and the second channel 102 are L-shaped, and the third channel 103 is linear, so that the cylindrical valve core 12 of the water flow control valve 10 can be molded in one go without the need for secondary processing in the later stage.

As shown in Figs.3A to 11C, the first channel 101 of the cylindrical valve core 12 of the water flow control valve 10 of the filter according to the embodiment of the present invention forms a first connecting portion 1011 and a second connecting portion 1012, and the second channel 102 forms a first communicating portion 1021 and a second communicating portion 1022, wherein the first connecting portion 1011 of the first channel 101 is communicated with the first communication opening 1201, the second connecting portion 1012 is communicated with the first fluid opening 121, the first communicating portion 1021 of the second channel 102 is communicated with the second communication opening 1202, and the second communicating portion 1022 is communicated with the second fluid opening 122, and the third channel 103 is formed between the first connecting portion 1011 of the first channel 101 and the first communicating portion 1021 of the second channel 102. Preferably, the first connecting portion 1011 and the second connecting portion 1012 of the first channel 101 are communicated with each other and they are substantially L-shaped; the first communicating portion 1021 and the second communicating portion 1022 of the second channel 102 are communicated with each other, and they are substantially L-shaped. More preferably, the first connecting portion 1011 and the second connecting portion 1012 of the first channel 101 are perpendicular to each other; the first communicating portion 1021 and the second communicating portion 1022 of the second channel 102 are perpendicular to each other.

Correspondingly, when the water flow control valve 10 is in the filtering working position, the raw water can flow from the water inlet channel 1101 (or the water inlet opening 11010 of the water inlet channel 1101) to the first communication opening 1201 under the action of water pressure, and further flow into the filtering device 20 through the first channel 101, the first fluid opening 121 and the first opening 201 of the filtering device 20, and the purified water generated after being filtered by the filter cartridge 22 of the filtering device 20 flows through the second opening 202 to the second fluid opening 122, and further flows to the second communication opening 1202 through the second fluid opening 122 and the second channel 102, and then flows out through the water outlet channel 1102 (or the water outlet opening 11020 of the water outlet channel 1102); when the water flow control valve 10 is in the raw water supply working position, the raw water can flow from the water inlet channel 1101 to the third communication opening 1203 and the third channel 103 under the action of water pressure, and further flow to the water outlet channel 1102 through the fourth communication opening 1204, and then flows out through the water outlet channel 1102; when the water flow control valve 10 is in the back-flushing working position, the raw water can flow from the water inlet channel 1101 to the second communication opening 1202 under the action of water pressure, and further flow into the filtering device 20 through the second channel 102, the second fluid opening 122 and the second opening 202 of the filtering device 20, and the draining water generated after the filter cartridge 22 of the filtering device 20 being back-flushed flows to the first fluid opening 121 through the first opening 201, and further flows to the first communication opening 1201 through the first fluid opening 121 and the first channel 101, and then flows out through the draining channel 1103 (or the draining opening 11030 of the draining channel 1103); when the water flow control valve 10 is in the rinse working position, the raw water can flow from the water inlet channel 1101 to the first communication opening 1201 and the first channel 101 under the action of water pressure, and further flow into the filtering device 20 through the first fluid opening 121 and the first opening 201 of the filtering device 20, and the draining water generated after the filter cartridge 22 of the filtering device 20 being rinsed flows to the second fluid opening 122 through the second opening 202, and further flows to the second communication opening 1202 through the second fluid opening 122 and the second channel 102, and then flows out through the draining channel 1103 (or the draining opening 11030 of the draining channel 1103). In other words, when the water flow control valve 10 is in the filtering working position, the first communication opening 1201, the first channel 101 and the first fluid opening 121 of the cylindrical valve core 12 define a first filtering passage 10011 communicated respectively with the water inlet channel 1101 of the valve body 11 and the first opening 201 of the filtering device 20, the second fluid opening 122, the second channel 102 and the second communication opening 1202 of the cylindrical valve core 12 define a second filtering passage 10012 communicated respectively with the second opening 202 of the filtering device 20 and the water outlet channel 1102 of the valve body 11; when the water flow control valve 10 is in the raw water supply working position, the third communication opening 1203, the third channel 103 and the fourth communication opening 1204 of the cylindrical valve core 12 define a water supply passage 10021 communicated respectively with the water inlet channel 1101 and the water outlet channel 1102 of the valve body 11; when the water flow control valve 10 is in the back-flushing working position, the second communication opening 1202, the second channel 102 and the second fluid opening 122 of the cylindrical valve core 12 define a first back-flushing flow passage 10031 communicated respectively with the water inlet channel 1101 of the valve body 11 and the second opening 202 of the filtering device 20, the first fluid opening 121, the first channel 101 and the first communication opening 1201 of the cylindrical valve core 12 define a second back-flushing flow passage 10032 communicated respectively with the first opening 201 of the filtering device 20 and the draining channel 1103 of the valve body 11; when the water flow control valve 10 is in the rinse working position, the first communication opening 1201, the first channel 101 and the first fluid opening 121 of the cylindrical valve core 12 define a first rinse passage 10041 communicated respectively with the water inlet channel 1101 of the valve body 11 and the first opening 201 of the filtering device 20, the second fluid opening 122, the second channel 102 and the second communication opening 1202 of the cylindrical valve core 12 define a second rinse passage 10042 communicated respectively with the second opening 202 of the filtering device 20 and the draining channel 1103 of the valve body 11. Preferably, when the water flow control valve 10 is in the pressure relief working position, the second communication opening 1202, the second channel 102 and the second fluid opening 122 of the cylindrical valve core 12 define a pressure relief flow passage 10022 communicated respectively with the draining channel 1103 of the valve body 11 and the second opening 202 of the filtering device 20.

As shown in Figs.3A to 11C, the valve body 11 of the water flow control valve 10 of the filter according to the embodiment of the present invention forms a first body 111, a second body 112 and a plurality of maintaining members 113, wherein the second body 112 forms a maintaining chamber 1120, the first body 111 forms the valve cavity 110, and the first body 111 is disposed inside the maintaining chamber 1120 of the second body 112, and the plurality of maintaining members 113 are provided between the second body 112 and the first body 111 to maintain the first body 111 in a predetermined position. Correspondingly, the first body 111 and the second body 112 are two components connected with each other, so that the first body 111 can be provided as a cylindrical shape with high symmetry to prevent irregular deformation of the valve cavity 110 of the valve body 11 due to irregular shape when the entire valve body 11 deforms, especially when it shrinks. In addition, the structure of the first body 111 and the second body 112 of the valve body 11 also allows the first body 111 and the second body 112 of the valve body 11 to be made of different materials, for example, the first body 111 can be made of rigid plastic, metal, or metal alloy (such as copper or copper alloy, which is more expensive) that is less prone to irregular deformation, and the second body 112 can be made of a lower cost plastic material, thereby reducing the manufacturing cost of the valve body 10 while ensuring that the shape of the valve chamber 110 is maintained. Further, the valve body 11 of the water flow control valve 10 of the filter of the present invention comprises the first body 111 and the second body 112, which also avoids the sealing and polishing process of flat sealing, resulting in lower production and manufacturing costs. Secondly, the valve core 12 of the water flow control valve 10 of the filter of the present invention is a cylindrical valve core, and the communication openings (the first communication opening 1201, the second communication opening 1202, the third communication opening 1203 and the fourth communication opening 1204) can be provided with larger sizes, so as to obtain larger flow rates with a smaller cylinder diameter (or size).

As shown in Figs.3A to 11C, the valve body 11 of the water flow control valve 10 of the filter according to the embodiment of the present invention further forms a spacing portion 114, wherein the spacing portion 114 is provided in the water inlet opening 11010 of the water inlet channel 1101, thereby dividing the water inlet opening 11010 of the water inlet channel 1101 into a first water inlet portion 11011 and a second water inlet portion 11012, wherein when the water flow control valve 10 is in the filtering working position, the first communication opening 1201 of the cylindrical valve core 12 is communicated to the first water inlet portion 11011 of the water inlet opening 11010 of the water inlet channel 1101 of the valve body 11; when the water flow control valve 10 is in the back-flushing working position, the second communication opening 1202 of the cylindrical valve core 12 is communicated to the first water inlet portion 11011 of the water inlet opening 11010 of the water inlet channel 1101 of the valve body 11; when the water flow control valve 10 is in the raw water supply working position, the third communication opening 1203 of the cylindrical valve core 12 is communicated to the first water inlet portion 11011 of the water inlet opening 11010 of the water inlet channel 1101 of the valve body 11; when the water flow control valve 10 is in the rinse working position, the first communication opening 1201 of the cylindrical valve core 12 is communicated to the second water inlet portion 11012 of the water inlet opening 11010 of the water inlet channel 1101 of the valve body 11 of the cylindrical valve core 12.

As shown in Figs.3A to 11C, the first water inlet portion 11011 of the water inlet opening 11010 of the water inlet channel 1101 of the valve body 11 of the water flow control valve 10 of the filter according to the embodiment of the present invention, the second water inlet portion 11012 of the water inlet opening 11010 of the water inlet channel 1101 of the valve body 11, the water outlet opening 11020 of the water outlet channel 1102, and the draining opening 11030 of the draining channel 1103 are arranged clockwise in this order in the inner wall 1110 of the valve body 11, or the first water inlet portion 11011 of the water inlet opening 11010 of the water inlet channel 1101 of the valve body 11 and the second water inlet portion 11012 of the water inlet opening 11010 of the water inlet channel 1101 of the valve body 11, the water outlet opening 11020 of the water outlet channel 1102 and the draining opening 11030 of the draining channel 1103 are arranged counterclockwise in this order in the inner wall 1110 of the valve body 11. Correspondingly, the second water inlet portion 11012 of the water inlet opening 11010 of the water inlet channel 1101 of the valve body 11 and the draining opening 11030 of the draining channel 1103 are respectively defined between the first water inlet portion 11011 of the water inlet opening 11010 of the water inlet channel 1101 and the water outlet opening 11020 of the water outlet channel 1102 of the valve body 11.

As shown in Figs.3A to 11C, the cylindrical valve core 12 of the water flow control valve 10 of the filter according to an embodiment of the present invention comprises an operating end 123 and a control end 124, wherein the control end 124 is extended from the operating end 123, and the first channel 101, the second channel 102 and the third channel 103 are spacedly formed in the control end 124, wherein the control end 124 is rotatably disposed inside the valve cavity 110 of the valve body 11.

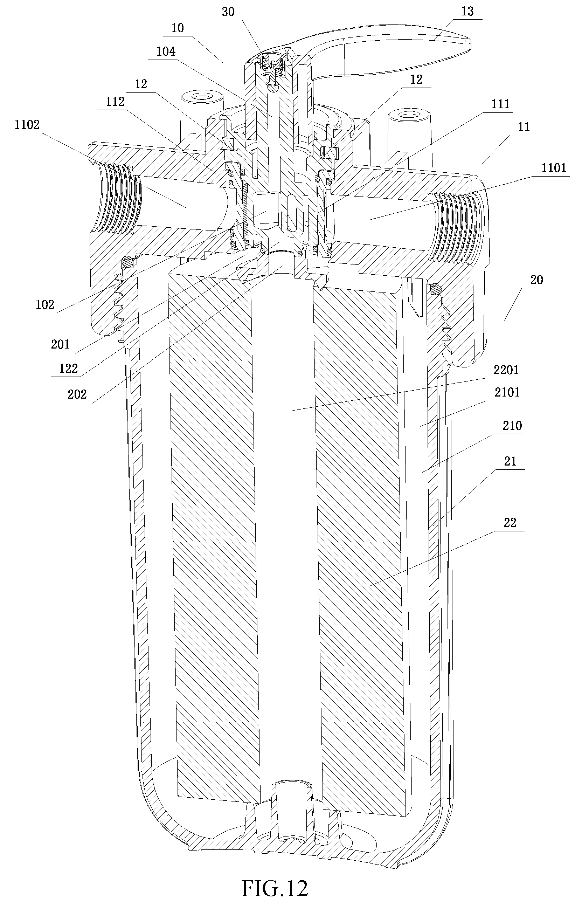

As shown in Fig 12, the filter according to the embodiment of the present invention further comprises a pressure relief valve 30, wherein the pressure relief valve 30 is directly or indirectly communicated with the purified water channel 2201 or the raw water channel 2101 of the filtering device 20, so that when the pressure relief valve 30 is opened, the water pressure inside the filtering device 20 can be released. As shown in Fig 12, the cylindrical valve core 12 of the filter according to the embodiment of the present invention further has a fourth channel 104, and the pressure relief valve 30 is provided at the water flow control valve 10, wherein the fourth channel 104 of the cylindrical valve core 12 is communicated with the pressure relief valve 30. As shown in Fig 12, preferably, the fourth channel 104 of the cylindrical valve core 12 is further communicated with the purified water channel 2201 or the raw water channel 2101 of the filtering device 20. That is to say, optionally, the pressure relief valve 30 is communicated with the second opening 202 of the filtering device 20 through the fourth channel 104, the second channel 102 and the second fluid opening 122, sequentially. Optionally, the fourth channel 104 of the cylindrical valve core 12 is provided to be respectively communicated to the first channel 101 and the pressure relief valve 30. Optionally, the fourth channel 104 of the cylindrical valve core 12 is provided to be respectively communicated to the first fluid opening 121 and the pressure relief valve 30. Optionally, the fourth channel 104 of the cylindrical valve core 12 is provided to be respectively communicated to the second fluid opening 122 and the pressure relief valve 30. Optionally, the pressure relief valve 30 is installed at the filtering device 20 and is communicated with the purified water channel 2201 or the raw water channel 2101 of the filtering device 20.

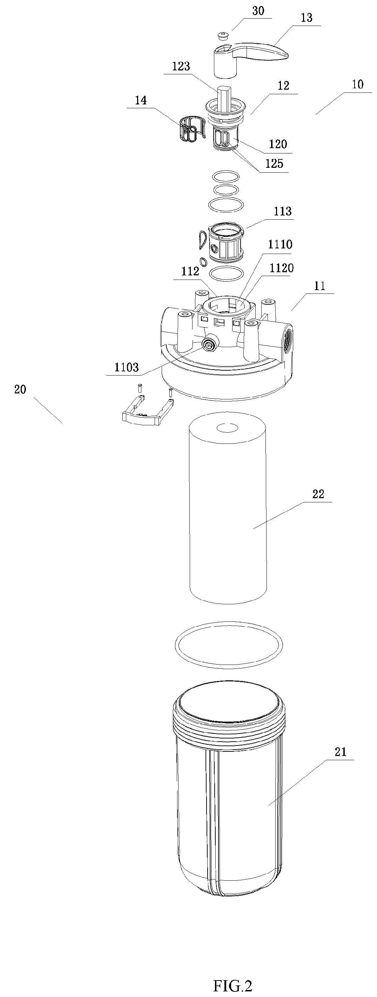

Referring to Figs.2 and 12, the water flow control valve 10 of the filter according to the embodiment of the present invention further comprises a handle 13, wherein the handle 13 is provided at the operating end 123 of the cylindrical valve core 12, so that the user can drive the cylindrical valve core 12 to rotate through the handle 13 to control the water flow control valve 10 to be in a corresponding working position.

As shown in Figs 2 to 11C, the water flow control valve 10 of the filter according to the embodiment of the present invention further has a plurality of sealing members 14, and the cylindrical valve core 12 further defines a plurality of sealing grooves 125, wherein the sealing grooves 125 are respectively arranged around the first communication opening 1201, the second communication opening 1202, the third communication opening 1203, and the fourth communication opening 1204 of the cylindrical valve core 12, and the plurality of sealing members 14 are respectively arranged in the plurality of sealing grooves 125 so that when the first communication opening 1201, the second communication opening 1202, the third communication opening 1203 and the fourth communication opening 1204 of the cylindrical valve core 12 are selectively communicated with the water inlet channel 1101 (or the water inlet opening 11010 of the water inlet channel 1101), the water outlet channel 1102 (or the water outlet opening 11020 of the water outlet channel 1102) and the draining channel 1103 (or the draining opening 11030 of the draining channel 1103), a water seal between the non-communication portion of the cylindrical valve core 12 and the non-communication portion of the inner wall 1110 of the valve body 11 can be ensured.

Those skilled in the art can understand that the above-mentioned filtering function, raw water supply function, pressure relief function, back-flushing function, standby function, and rinse function of the filter of the present invention are all achieved through the water flow control of the water flow control valve 10 of the filter of the present invention, and there is no limitation on the structure of the filtering device 20 of the present invention. Correspondingly, the filter of the present invention can utilize existing filtering devices without the need for additional design of filtering devices with special structures.

**It** is worth mentioning that the terms of first, second, third and/or fourth herein are only used to name different components (or elements) of the present invention and distinguish between different components, elements and structures of the present invention, they themselves have no meaning of order or number.

Those skilled in the art should understand that the embodiments of the present invention shown in the above description and the accompanying drawings are only examples and do not limit the present invention. The objects of the present invention have been completely and effectively realized. The function and structural principle of the present invention have been shown and explained in the above embodiments. Without departing from the principle, the embodiments of the present invention can be deformed or modified.

## Claims

1. A filter, comprising:
a filtering device, wherein the filtering device has a first opening and a second opening; and
a water flow control valve connected with the filtering device, wherein the water flow control valve comprises a valve body and a cylindrical valve core, wherein the valve body defines a valve cavity, a water inlet channel and a water outlet channel, the cylindrical valve core has a control surface, a first fluid opening, a second fluid opening, a first communication opening, a second communication opening, a third communication opening and a fourth communication opening, wherein the first communication opening, the second communication opening, the third communication opening and the fourth communication opening are formed at the control surface of the cylindrical valve core and separated from each other, wherein the first fluid opening is communicated with the first communication opening, the second fluid opening is respectively communicated with the second opening and the second communication opening, and the third communication opening is communicated with the fourth communication opening, the water inlet channel of the valve body is adapted to be communicated with a raw water source, wherein the cylindrical valve core is rotatably arranged inside the valve cavity, and when the cylindrical valve core is rotated to control the water flow control valve in a filtering working position, the first fluid opening of the cylindrical valve core is communicated with the first opening, the first communication opening of the cylindrical valve core is further communicated to the water inlet channel of the valve body, and the second communication opening of the cylindrical valve core is further communicated to the water outlet channel of the valve body.

2. The filter, as recited in claim 1, wherein when the cylindrical valve core is rotated to control the water flow control valve to be in a raw water supply working position, the third communication opening of the cylindrical valve core is communicated to the water inlet channel of the valve body, and the fourth communication opening of the cylindrical valve core is communicated to the water outlet channel of the valve body.

3. The filter, as recited in claim 1, wherein the valve body further has a draining channel, wherein when the cylindrical valve core is rotated to control the water flow control valve to be in a pressure relief working position, the second communication opening of the cylindrical valve core is respectively communicated to the second fluid opening and the drain channel of the valve body, and the first communication opening of the cylindrical valve core is blocked by an inner wall of the valve body.

4. The filter, as recited in claim 1, wherein the valve body further has a draining channel, wherein when the cylindrical valve core is rotated to control the water flow control valve to be in a back-flushing working position, the second communication opening of the cylindrical valve core is communicated to the water inlet channel of the valve body, the first fluid opening of the cylindrical valve core is communicated with the first opening, and the first communication opening of the cylindrical valve core is communicated to the draining channel of the valve body.

5. The filter, as recited in claim 1, wherein when the cylindrical valve core is rotated to control the water flow control valve to be in a standby working position, the first communication opening, the second communication opening and the third communication opening of the cylindrical valve core are respectively blocked by an inner wall of the valve body.

6. The filter, as recited in claim 1, wherein the valve body further has a draining channel, when the cylindrical valve core is rotated to control the water flow control valve to be in a rinse working position, the first fluid opening of cylindrical valve core is communicated with the first opening, the first communication opening of the cylindrical valve core is communicated to the water inlet channel of the valve body, and the second communication opening of the cylindrical valve core is communicated to the draining channel of the valve body.

7. The filter, as recited in claim 1, wherein when the water flow control valve is in the filtering working position, the third communication opening and the fourth communication opening of the cylindrical valve core are both blocked by an inner wall of the valve body.

8. The filter, as recited in claim 2, wherein when the water flow control valve is in the raw water supply working position, the second communication opening of the cylindrical valve core is blocked by an inner wall of the valve body, and the first communication opening of the cylindrical valve core is blocked by the inner wall of the valve body.

9. The filter, as recited in claim 4, wherein when the water flow control valve is in the back-flushing working position, the third communication opening and the fourth communication opening of the cylindrical valve core are both blocked by an inner wall of the valve body.

10. The filter, as recited in claim 6, wherein when the water flow control valve is in the rinse working position, the third communication opening and the fourth communication opening of the cylindrical valve core are both blocked by an inner wall of the valve body.

11. The filter, as recited in claim 1, 2, 3, 4, 5, 6, 7, 8, 9 or 10, wherein the cylindrical valve core further has a first channel, a second channel and a third channel, wherein the first fluid opening and the first communication opening are communicated through the first channel, the second fluid opening and the second communication opening are communicated through the second channel, and the third communication opening and the fourth communication opening are communicated through the third channel.

12. The filter, as recited in claim 11, wherein the cylindrical valve core comprises an operating end and a control end, wherein the control end is extended from the operating end, and the first channel, the second channel and the third channel are spacedly formed in the control end, wherein the control end is rotatably disposed inside the valve cavity of the valve body.

13. The filter, as recited in claim 1, 2, 3, 4, 5, 6, 7, 8, 9 or 10, wherein the first fluid opening is formed at a position of the cylindrical valve core, which is adjacent to the first opening of the filtering device; the second fluid opening is formed at another position of the cylindrical valve core, which is adjacent to the second opening of the filtering device.

14. The filter, as recited in claim 3, 5,7,9 or 10, wherein the water inlet channel has a water inlet opening, the water outlet channel has a water outlet opening, and the draining channel has a draining opening, wherein the draining opening of the draining channel, the water inlet opening of the water inlet channel and the water outlet opening of the water outlet channel are spacedly defined in the inner wall of the valve cavity, and the first communication opening, the second communication opening, the third communication opening, the fourth communication opening, the water inlet opening of the water inlet channel, the water outlet opening of the water outlet channel and the draining opening of the draining channel are located at the same height, so that the first communication opening and the second communication opening are capable of being selectively communicated to the water inlet opening of the water inlet channel, the water outlet opening of the water outlet channel and the draining opening of the draining channel, and the third communication opening and the fourth communication opening are capable of being selectively communicated to the water inlet opening of the water inlet channel and the water outlet opening of the water outlet channel.

15. The filter, as recited in claim 14, wherein the first communication opening, the third communication opening, the second communication opening and the fourth communication opening of the cylindrical valve core are formed clockwise in this order in the control surface of the cylindrical valve core and the water inlet opening of the water inlet channel, the draining opening of the draining channel and the water outlet opening of the water outlet channel of the valve body are formed clockwise in this order in the inner wall of the valve body.

16. The filter, as recited in claim 14, wherein the first communication opening, the third communication opening, the second communication opening and the fourth communication opening of the cylindrical valve core are formed counterclockwise in this order in the control surface of the cylindrical valve core and the water inlet opening of the water inlet channel, the draining opening of the draining channel and the water outlet opening of the water outlet channel of the valve body are formed counterclockwise in this order in the inner wall of the valve body.

17. The filter, as recited in claim 1, 2, 3, 4, 5, 6, 7, 8, 9 or 10, wherein the valve body forms a first body, a second body and a plurality of maintaining members, wherein the second body forms a maintaining chamber, the first body forms the valve cavity, and the first body is disposed inside the maintaining chamber of the second body, and the plurality of maintaining members are provided between the second body and the first body to maintain the first body in a predetermined position.

18. The filter, as recited in claim 6, wherein the water inlet channel has a water inlet opening, the water outlet channel has a water outlet opening, and the draining channel has a draining opening, the valve body further forms a spacing portion, wherein the draining opening of the draining channel, the water inlet opening of the water inlet channel and the water outlet opening of the water outlet channel are spacedly defined in an inner wall of the valve cavity, wherein the spacing portion is provided in the water inlet opening of the inlet channel to divide the water inlet opening of the water inlet channel into a first water inlet portion and a second water inlet portion, wherein when the water flow control valve is in the filtering working position, the first communication opening of the cylindrical valve core is communicated to the first water inlet portion of the water inlet opening of the water inlet channel of the valve body; when the water flow control valve is in a raw water supply working position, the third communication opening of the cylindrical valve core is communicated to the first water inlet portion of the water inlet opening of the water inlet channel of the valve body; when the water flow control valve is in a back-flushing working position, the second communication opening of the cylindrical valve core is communicated to the first water inlet portion of the water inlet opening of the water inlet channel of the valve body; when the water flow control valve is in the rinse working position, the first communication opening of the cylindrical valve core is communicated to the second water inlet portion of the water inlet opening of the water inlet channel of the valve body.

19. The filter, as recited in claim 11, wherein the first channel of the cylindrical valve core forms a first connecting portion and a second connecting portion, and the second channel forms a first communicating portion and a second communicating portion, wherein the first connecting portion of the first channel is communicated with the first communication opening, the second connecting portion is communicated with the first fluid opening, the first communicating portion of the second channel is communicated with the second communication opening, and the second communicating portion is communicated with the second fluid opening, and the third channel is formed between the first connecting portion of the first channel and the first communicating portion of the second channel.

20. The filter, as recited in claim 19, wherein the first connecting portion and the second connecting portion of the first channel are communicated with each other and substantially L-shaped; the first communicating portion and the second communicating portion of the second channel are communicated with each other and substantially L-shaped, the third channel is linear.
